# EUROPÄISCHE PATENTANMELDUNG

(11) **EP 4 023 055 A2**
(43) Veröffentlichungstag der Anmeldung: **06.07.2022**
(21) Anmeldenummer: 21020655.3
(22) Anmeldetag: 28.12.2021
(51) Int. Cl.: A01G 9/24, A01G 7/04, A01G 31/02, A01G 27/00

(54) **SYSTEM ZUR AUTOMATISCHEN ERKENNUNG VON WACHSTUMSPARAMETERN BEI PFLANZEN UND MODUL ZUR PASSIVEN AEROPONISCHEN BEWÄSSERUNG VON PFLANZEN IN VERTIKALER RICHTUNG SOWIE VERTIKALE PFLANZENANLAGE**

(30) Priorität: 29.12.2020 DE 102020135051
(71) Anmelder: Hönle, Yannic, 95447 Bayreuth (DE); Martin González, Miriam, 95447 Bayreuth (DE)
(72) Erfinder: Hönle, Yannic, 95447 Bayreuth (DE); Martin González, Miriam, 95447 Bayreuth (DE)
(74) Vertreter: Völger, Karl Wolfgang

(57) **Zusammenfassung**

Die vorliegende Erfindung bezieht sich auf ein System (1) zur automatischen Erkennung von Wachstumsparametern bei Pflanzen und zur spezifischen Steuerung der Pflanzenmorphologie, umfassend
- eine Pflanzenebene (101), welche zumindest eine Pflanze (101) aufweist,
- eine bildgebende Ebene (103), welche zumindest eine bildgebende Einheit (10301) aufweist,
- eine lichtgebende Ebene (105), welche zumindest eine Beleuchtungsmatrix (10501) aufweist,
wobei die bildgebende Ebene (103) und die lichtgebende Ebene (105) parallel zu der Pflanzenebene (101) angeordnet und zu dieser hin ausgerichtet sind,
- eine Versorgungseinheit (109) zur Versorgung der Pflanzenebene (101) mit Flüssigkeit, welche mindestens ein zentrales Reservoir (10901) mit einer Zugabeeinrichtung (10905) aufweist, und
- eine Steuerungseinheit (107) zur Auswertung und Verarbeitung der bildgebenden Ebene (103), zur Steuerung der lichtgebenden Ebene (105) und zur Steuerung der Versorgungseinheit (109),
wobei die Beleuchtungsmatrix (10501) der lichtgebenden Ebene (105)
- zumindest eine weiße LED, zumindest eine blaue LED, zumindest eine rote LED und zumindest eine fern-rote LED
oder
- zumindest eine weiße LED mit einem erhöhten Rotanteil, zumindest eine weiße LED mit einem erhöhten Blauanteil und zumindest eine fern-rote LED
aufweist.

Die Erfindung bezieht sich ferner auf ein Modul (3) zur passiven aeroponischen Bewässerung von Pflanzen in vertikaler Richtung, sowie auf eine vertikale Pflanzenanlage (5),

## Beschreibung

Die vorliegende Erfindung betrifft ein System zur automatischen Erkennung von Wachstumsparametern bei Pflanzen und ein Modul zur passiven aeroponischen Bewässerung von Pflanzen in vertikaler Richtung sowie vertikale Pflanzenanlage.

Indoor Gärten erfreuen sich immer größerer Beliebtheit, da sich mit Ihnen auch in der Stadt und sogar in Innenräumen Pflanzen, Nutzpflanzen wie auch Zierpflanzen, anbauen lassen. Vor allem für Personen ohne Garten bieten diese eine interessante Alternative. Bisherige Produkte begrenzen den Anbau allerdings häufig aufgrund technischer Limitationen auf Kräuter und Salate, was den Benutzer im Vergleich zum traditionellen Garten entsprechend benachteiligt. Der Anbau von früchtetragenden Pflanzen ist in diesen Systemen häufig komplizierter und setzt Wissen voraus, das Personen ohne Garten in den meisten Fällen nicht haben. Hinsichtlich der Anwendung im Innenraum spielt dabei vor allem die Hydroponik aufgrund der Vielzahl von Vorteilen eine große Rolle. Durch den Anbau in einem neutralen Medium anstelle von Erde wird die Anzahl von Schädlingen begrenzt. Die Pflanzen werden gezielt über eine mit Nährstoffen angereicherte Flüssigkeit versorgt und bringen entsprechend gesündere Pflanzen hervor. Um eine echte Alternative zu traditionellen Gärten zu werden, müssen Indoor Gärten jedoch noch einige Probleme lösen: Das Problem des Platzmangels wird durch eine vertikale Anordnung schnell behoben, jedoch muss die Wartezeit bis zur Ernte für eine praktische Anwendung so weit wie möglich reduziert werden. Perspektivisch können sog. Smarte Indoor Gärten sogar eine dezentrale Lebensmittelversorgung gewährleisten, sofern der Anbauvorgang so weit wie möglich vom nicht vorhandenen Gärtnereiwissen des Benutzers unabhängig gemacht und so automatisiert wird, dass zuverlässig und entsprechend schnell Pflanzen mit möglichst hohem Ertrag angebaut werden können.

Aeroponik ist eine spezielle Form der Hydroponik, bei der die Pflanzenwurzeln direkt mit der Nährstoffflüssigkeit in der Gestalt eines Sprühnebels versorgt werden. Die Tröpfchenform sorgt für eine schnellere Aufnahme der Nährstoffe und regt das Wurzelwachstum an. Die resultierende gesündere Pflanze liefert einen erhöhten Ernteertrag bei beschleunigtem Wachstum. Zusätzlich dazu ist der Wasserverbrauch bei gleicher Erntemenge geringer als im Vergleich zur herkömmlichen Hydroponik und dem traditionellen Anbau.

Aus dem Stand der Technik sind daher bereits Lösungen bekannt. So beschreibt etwa WO 2020/076729 A1 Methoden und Systeme für den Gartenbau, konkret modulare Anbausysteme, in denen Pflanzen ohne Erde wachsen können. Ein darin beschriebener Pflanzenzuchtbehälter ist mit einem unteren Abschnitt und einer Wand mit einer ersten Öffnung aufgebaut, die sich von dem unteren Abschnitt nach oben erstreckt. Der Pflanzenzuchtbehälter weist ferner eine Öffnung auf, die von einem oberen Abschnitt der Wand gebildet wird und zur Aufnahme eines abnehmbaren Saatgutbehälters konfiguriert ist. Der Pflanzenzuchtbehälter umfasst ferner ein Reservoir, das durch einen unteren Abschnitt der Wand bereitgestellt wird. Der Behälter kann so konfiguriert sein, dass er herausnehmbar in einen Anschluss eines Moduls eines Pflanzenwuchssystems eingesetzt werden kann.

Ferner beschreibt EP 2 734 034 B1 eine Vorrichtung zum Züchten von Pflanzen umfassend einen Rahmen, an den Pflanzen angesetzt werden, um in einem Substrat zu wachsen, Bewässerungsmittel, die an dem Rahmen montiert sind, um das Substrat mit einer Bewässerungsflüssigkeit zu bewässern, Mittel, die an dem Rahmen montiert sind, um einen Luftstrom durch das Substrat zu erzeugen, wobei zumindest einige der Pflanzen zusammen mit ihren Substraten in modularen Wachstumseinheiten platziert sind, wobei Öffnungen für die Wachstumseinheiten in dem Rahmen angeordnet sind, in die diese lösbar installiert sind, unabhängig von den Bewässerungsmitteln. Diese Vorrichtung zeichnet sich dadurch aus, dass die Pflanzen derart platziert sind, so dass sie in Wachstumseinheiten getrennt voneinander wachsen, und der Rahmen einen Raum zwischen einer Abdeckung, einer Vorderwand, einer Hinterwand und einem geschlossenen unteren Teil des Rahmens abgrenzt, wobei die Vorderwand Öffnungen umfasst, die in der Abdeckung an dem oberen Teil der Wandstruktur angeordnet sind, und dass eine Luftzirkulation innerhalb des Rahmens angeordnet ist und die Luftzirkulation über Öffnungen für Wachstumseinheiten und die Öffnungen des Rahmens mit der Außenseite des Rahmens verbunden ist, und wobei ein Mittel zur Luftzirkulation an den Öffnungen des Rahmens montiert ist, um einen Luftstrom durch das Substrat zu erzeugen.

Zur Erkennung von Nährstoffdefiziten/-überschüssen und Abweichungen der Nährstofflösung vom optimalen pH-Wert werden aktuell pH- und Elektrische Leitfähigkeits (EC)-Sensoren benutzt.

Die Versorgung der Pflanzen in aktuellen Indoor Gärten entspricht einem selbstbewässernden hydroponischen Pflanzentopf. Weit verbreitet sind dabei Countertop Lösungen wie WO 2018/150127 A1. Das Medium nimmt über einen Docht passiv Nährstoffflüssigkeit aus einem Reservoir auf und versorgt damit die Pflanze. Auch in vertikalen Gärten wird häufig diese Bewässerungsmethode gewählt, wie in EP 2 885 963 A1. Dabei wird die Flüssigkeit über eine Pumpe in die Höhe gepumpt und läuft dann abwärts an den Dochten vorbei. Andernfalls wird die sog. Nutrient Film Technique (NFT) verwendet, wie in WO 2017/185116 A1, bei der sich das Medium und die Wurzeln der Pflanzen permanent in einem seichten Strom aus Nährstofflösung befinden. Aeroponische Bewässerung in der Vertikalen wird in einem Regalsystem durch Sprinkler gelöst, die von unten ein aufgespanntes Filztuch benetzen. Diese Aeroponik-Megafarmen sollen als Alternative für großflächigen Anbau dienen. Bei dem "industriellem" Anbau ist die Anfälligkeit und damit verbundene Notwendigkeit der Wartung der Sprinkler kein Problem. Im kleineren Stil, als System für den Endkunden gedacht, nutzt WO 2018/158093 A1 umgeleitete Flüssigkeitsnebel, die durch schwingende Ultraschallmembranen (Vernebler) erzeugt werden.

Die bekannten Systeme haben neben allen Vorteilen auch Nachteile für den Nutzer. pH- und EC-Sensoren müssen in regelmäßigen Abständen neu kalibriert werden und sind zu teuer, um für den Anbau geringer Mengen von Pflanzen interessant zu sein. Bei den EC-Sensoren wird allerdings nur der absolute Salzgehalt im Wasser gemessen, die eigentlich wichtigen Nährstoffungleichgewichte und einzelne Nährstoff-Konzentrationen können nicht automatisiert erkannt werden. Aktuell wird daher ein "gutes Mittel" anstelle von optimalen Nährstoffzusammensetzungen gewählt. Aufgrund der starken Zusammenhänge kann ohne eine Anpassung der Beleuchtung hinsichtlich Lichtspektrums und -intensität und entsprechende Abstimmung der verfügbaren Nährstoffe das Wachstum von Pflanzen ohnehin nicht wirklich optimiert werden. Während bei Salaten und Kräutern möglichst vegetatives Wachstum erwünscht ist, sollen früchtetragende Pflanzen möglichst schnell zur Blüte kommen. Das Erreichen dieser Stadien kann durch die Beleuchtung mit bestimmten Wellenlängen positiv beeinflusst werden, wobei die Verhältnisse hier gegenteilig sind. Wellenlängen, die das vegetative Wachstum verbessern, verzögern die Zeit bis zur Blüte. Aktuelle Systeme nehmen darauf keine Rücksicht und beleuchten die Pflanzen unabhängig vom aktuellen Wachstumsstadium oder gewünschter Phase gleichmäßig mit einem gleichbleibenden Licht. Aufgrund dieser Verhältnisse lassen sich fruchttragende Pflanzen in den aktuellen Produkten nicht oder nicht in für eine dezentrale Versorgung ausreichender Menge anbauen. Die aktuellen Produkte verstehen sich dadurch teilweise selbst lediglich als "Kräutergärten". Dazu kommt, dass zur erfolgreichen Ernte von Früchten oftmals die Bestäubung und ertragsoptimierende Beschneidung gehört und dieses Wissen mit aktuellen Systemen nicht vermittelt werden kann.

Zudem muss weiterhin der Mensch das Pflanzenwachstum kontrollieren und die Zufuhr von Wasser und Nährstoffen regeln. Bei mangelnder Erfahrung oder längerer Abwesenheit droht auch aus diesem Grund eine schwere Beeinträchtigung oder gar ein Totalverlust der angebauten Pflanzen.

Die dauerhafte Bewässerung in hydroponischen Systemen mittels Dochten (egal ob als Countertop oder Vertikaler Garten) sorgt entgegen gängiger Meinung nicht für optimales Wachstum. In der richtigen Menge können durch Umgebungsparameter ausgelöste Stresssituationen bei den meisten Pflanzen für eine deutliche Beschleunigung des Wachstums sorgen. Das dauerhaft feuchte Medium in Docht-Hydroponik ist enorm anfällig für Schimmel- und Algenwachstum auf der Oberfläche, was von vielen Benutzern aktueller Produkte bemängelt wird. Pflanzen wie Rosmarin oder Linsen, die eine eher trockene Umgebung bevorzugen, wachsen durch die ständige Überwässerung nur sehr langsam oder gar nicht. Die Bewässerung über horizontale NFT weist ähnliche Nachteile auf. Eine Bewässerung mittels vertikalen Rohren ermöglicht bedarfsweise den Einsatz von "Dürrephasen", allerdings hat der ungebremste Wasserfluss eine Beschneidung der jungen Wurzeln zur Folge. Dadurch wird das Wurzelwachstum und damit das Wachstum der gesamten Pflanze stark beeinträchtigt. Aeroponische Bewässerung ist aufgrund der Wachstumsbeschleunigung eine begehrenswerte Form der Bewässerung, jedoch sind die aktuell dafür verwendeten Bewässerungseinheiten anfällig für Störungen, was zu einem Totalverlust der angebauten Pflanzen führen kann und zusätzliche laufende Kosten erzeugt. Der durch notwendigen Austausch von Sprinklern und Ultraschallmembranen entstehende Wartungsaufwand ist in einer industriellen Anwendung irrelevant, für einen unerfahrenen Endverbraucher allerdings unzumutbar. Ultraschallvernebler erhöhen außerdem die Wassertemperatur um bis zu 10° C, was bei vielen Pflanzen zu Wurzelfäulnis und eingeschränktem Wachstum führt.

Der vorliegen Erfindung liegt daher die Aufgabe zugrunde, ein System zur automatischen Erkennung von Wachstumsparametern bei Pflanzen und deren pflanzenspezifische Wachstumsoptimierung, durch Steuerung der Nährstoffe und Lichtverhältnisse, bereitzustellen und ein Modul zur passiven aeroponischen Bewässerung von Pflanzen in vertikaler Richtung anzugeben, mit denen die Probleme des Standes der Technik gelöst werden. Insbesondere soll die Überwachung und Steuerung des Pflanzenwachstums automatisiert werden. Ferner soll die passive Zerstäubung innerhalb des Bewässerungssystems ermöglicht werden.

Diese Aufgabe wird in einem ersten Aspekt der vorliegenden Erfindung durch ein System (1) zur automatischen Erkennung von Wachstumsparametern bei Pflanzen und zur spezifischen Steuerung der Pflanzenmorphologie gelöst, umfassend
- eine Pflanzenebene (101), welche zumindest eine Pflanze (10101) aufweist,
- eine bildgebende Ebene (103), welche zumindest eine bildgebende Einheit (10301) aufweist,
- eine lichtgebende Ebene (105), welche zumindest eine Beleuchtungsmatrix (10501) aufweist,
   wobei die bildgebende Ebene (103) und die lichtgebende Ebene (105) parallel zu der Pflanzenebene (101) angeordnet und zu dieser hin ausgerichtet sind,
- eine Versorgungseinheit (109) zur Versorgung der Pflanzenebene (101) mit Flüssigkeit, welche mindestens ein zentrales Reservoir (10901) mit einer Zugabeeinrichtung (10905) aufweist, und
- eine Steuerungseinheit (107) zur Auswertung und Verarbeitung der bildgebenden Ebene (103), zur Steuerung der lichtgebenden Ebene (105) und zur Steuerung der Versorgungseinheit (109),
   wobei die Beleuchtungsmatrix (10501) der lichtgebenden Ebene (105)
- zumindest eine weiße LED, zumindest eine blaue LED, zumindest eine rote LED und zumindest eine fern-rote LED
   oder
- zumindest eine weiße LED mit einem erhöhten Rotanteil, zumindest eine weiße LED mit einem erhöhten Blauanteil und zumindest eine fern-rote LED
   aufweist.

Das erfindungsgemäße System (1) kann grundsätzlich vertikal oder horizontal angeordnet sein, zudem sind schräge Anordnungen zwischen der Vertikalen und der Horizontalen denkbar. In Verbindung mit dem nachstehend beschriebenen erfindungsgemäßen Modul (3) ist die vertikale Ausrichtung besonders bevorzugt.

Mit "Wachstumsparametern" werden erfindungsgemäß beispielsweise Nährstoffdefizite und Nährstoffüberschüsse, Krankheitsbilder, Wachstumsstadium, Pflanzenmaße, Photosynthese, Sortentyp und Fruchtreife bezeichnet.

Bei der zu steuernden "Pflanzenmorphologie" handelt es sich erfindungsgemäß um die Form, die Größe und die Dicke der Blätter, die Länge des Setzlings, die Länge des Blattstiels, die Länge des Pflanzenstiels, den Abstand der Blattknoten, die Farbe der Blätter und die Länge der Wurzeln.

Unter "Pflanzenebene" (101) wird erfindungsgemäß jene Ebene bezeichnet, in welcher die Pflanzen (10101) (ungeachtet ob Nutz- oder Zierpflanzen) angeordnet sind. Dabei handelt es sich um eine Projektion der eigentlich dreidimensionalen Pflanzen, wie sie aus Sicht der bildgebenden Ebene (103) erscheinen.

In der erfindungsgemäßen "bildgebenden Ebene" (103) ist zumindest eine bildgebende Einheit (10301) angeordnet, welche eine oder mehrere Pflanzen (10101) erfassen kann. Abhängig von der Art und Größe der Pflanzen (10101) kann auch eine bildgebende Einheit (10301) pro Pflanze (10101) vorgesehen sein.

Die "bildgebende Einheit" (10301) ist erfindungsgemäß insbesondere eine Kamera, deren Aufnahmen an die Steuerungseinheit (107) weitergegeben werden. Dabei kann es sich auch um spezielle Kameras wie z.B. Infrarot-Kameras handeln, oder um Kameras mit fern-roten Filtern.

Die erfindungsgemäße "lichtgebende Ebene" (105) dient der bedarfsgerechten Beleuchtung sowie ertragssteigernden und platzoptimierenden Wachstumssteuerung der Pflanzen (10101) in der Pflanzenebene (101), wofür zumindest eine Beleuchtungsmatrix (10501) vorgesehen ist.

Mit "Versorgungseinheit" (109) wird erfindungsgemäß jener Teil des Systems (1) bezeichnet, welcher die Versorgung der Pflanze (10101) mit Wasser und Nährstoffen dient. Hierzu weist die Versorgungseinheit (109) mindestens ein zentrales Reservoir (10901) auf, in dem mit Nährstoffen angereichertes Wasser bevorratet wird. An dem einen zentralen Reservoir (10901) ist eine Zugabeeinrichtung (10905) vorgesehen, über welche Nährstoffe, Zusatzstoffe etc. in das zentrale Reservoir (10901) eingegeben werden können. Diese Eingabe kann manuell auf Hinweis der Steuerungseinheit (107) oder automatisch durch die Steuerungseinheit (107) selbst erfolgen. Die Versorgungseinheit (109) weist zudem eine zentrale Pumpe (10903) auf, die das mit Nährstoffen angereicherte Wasser aus dem jeweiligen zentralen Reservoir (10901) zu den Pflanzen (10101) bringt.

Die erfindungsgemäße Steuerungseinheit (107) ist dazu ausgelegt, die von der bildgebenden Einheit (10301) empfangenen Daten auszuwerten und zu verarbeiten. Insbesondere weist die Steuerungseinheit (107) die Möglichkeit zur Bildauswertung der durch die bildgebende Einheit (10301) erzeugten Bilder auf, entweder direkt oder indirekt durch drahtlose Weiterleitung der Daten an eine Zentrale, beispielsweise einen zentralen Server bei einem betreuenden Unternehmen (nicht beim Nutzer selbst). Diese Bildauswertung erfolgt vorzugsweise hinsichtlich bestimmter Parameter, welche die Färbung der Blätter, die Form der Blätter, die Anzahl der Blätter, die Form der Blüten, die Anzahl der Blüten, das Vorhandensein von Schimmel, das Vorhandensein von Schädlingen, das Vorhandensein einer Pflanze (10101) in der Aufnahmeöffnung (30901), den Bewässerungsgrad des Mediums (315) einschließen.

Über diese Parameter kann durch die Betrachtung des zeitlichen Verlaufs insbesondere indirekt hergeleitet werden: die Pflanzensorte, das Wachstumsstadium der Pflanze (10101), elementspezifische Nährstoffdefizite- und Nährstoffüberschüsse, unzureichende Lichtverhältnisse, die Wachstumsrate, die Gesundheit der Pflanze (10101), das Erntedatum und die Erntemenge sowie Über- oder Unterbewässerung.

Die erfindungsgemäße Steuerungseinheit (107) weist für eine indirekte Weiterleitung der Daten vorzugsweise eine Einrichtung zum Aufbau einer drahtlosen Verbindung mit einem zentralen Server/Möglichkeit zum Senden und Empfangen von Daten von einer Zentrale auf.

Die erfindungsgemäße Steuerungseinheit (107) ist ferner dazu ausgelegt, die Wassermenge und die Nährstoffzusammensetzung für die Pflanzen (10101) mittels der Versorgungseinheit (109) zu steuern. Ebenso ist die erfindungsgemäße Steuerungseinheit (107) dazu ausgelegt, die zumindest eine Beleuchtungsmatrix (10501) der lichtgebenden Ebene (105) zu steuern.

Das erfindungsgemäße System (1) zeichnet sich dadurch aus, dass die Beleuchtungsmatrix (10501) der lichtgebenden Ebene (105) entweder
- zumindest eine weiße LED, zumindest eine blaue LED, zumindest eine rote LED und zumindest eine fern-rote LED
   oder
- zumindest eine weiße LED mit einem erhöhten Rotanteil, zumindest eine weiße LED mit einem erhöhten Blauanteil und zumindest eine fern-rote LED
   aufweist.

Die weiße LED hat ein Wellenlängenspektrum von 400 nm bis 800 nm, die blaue LED hat ein Wellenlängenspektrum von 400 nm bis 500 nm, die rote LED hat ein Wellenlängenspektrum von 600 nm bis 700 nm und die fern-rote LED hat ein Wellenlängenspektrum von 701 nm bis 800 nm.

Die weiße LED mit einem erhöhten Rotanteil und die weiße LED mit einem erhöhten Blauanteil werden wie folgt definiert.

Als Blauanteil wird die Summe aller Relativen Intensitäten der Wellenlängen 400 nm bis 500 nm zur Summe aller Relativen Intensitäten in Prozent definiert. Als Rotanteil wird die Summe aller Relativen Intensitäten der Wellenlängen 600 nm bis 700 nm zur Summe aller Relativen Intensitäten in Prozent definiert. Es werden nur die Relativen Intensitäten in einer Spektralverteilung im Bereich 400 nm bis 800 nm berücksichtigt. Das Verhältnis Blauanteil/Rotanteil versteht sich als das Ergebnis der Division Blauanteil geteilt durch Rotanteil.

Eine weiße LED mit erhöhtem Blauanteil besitzt sowohl einen Blauanteil von mind. 20 % und ein Verhältnis Blauanteil/Rotanteil von mind. 1,25 (Optimal: 20 % - 40 % und Blau/Rot-Verhältnis 1,25 bis 2,25).

Eine weiße LED mit erhöhtem Rotanteil besitzt sowohl einen Rotanteil von mind. 20 % und ein Verhältnis Blauanteil/Rotanteil von höchstens 0,8 (Optimal: 20 % - 40 % und Blau/Rot-Verhältnis 0,45 bis 0,8).

Alle LED mit einem Blau/Rot-Verhältnis größer 0,8 und kleiner 1,25 werden als eine weiße LED definiert, ohne signifikante Unterschiede im blauen/roten Spektrum und damit ohne signifikante Auswirkungen auf die Steuerung der Pflanzenmorphologie zu haben.

Jede LED (LED: Licht emittierende Diode) in der erfindungsgemäßen Beleuchtungsmatrix (10501) kann von der erfindungsgemäßen Steuerungseinheit (107) einzeln angesteuert werden. Auf diese Weise ist es möglich, für jede Pflanze (10101) individuell die benötigte Beleuchtung sicherzustellen.

Diese individuelle Beleuchtung kann durchgeführt werden, ohne andere Pflanzen (10101) im erfindungsgemäßen System (1) negativ zu beeinflussen. Beispielsweise sollen Tomaten möglichst früh zur Blüte gebracht werden (d.h. mehr rotes Licht), während die Blüte beispielsweise bei Basilikum aufgrund des entstehenden bitteren Geschmacks möglichst lange herausgezögert werden soll (d.h. mehr blaues Licht). So kann erfindungsgemäß für jede Pflanze (10101) in jedem Wachstumsstadium (für den menschlichen Nutzen) eine optimale Lichtversorgung sichergestellt und dabei die Zeit zur Ernte verringert werden.

Das erfindungsgemäße System (1) weist eine Reihe von Vorteilen gegenüber dem Stand der Technik auf.

Durch den Einsatz der erfindungsgemäßen bildgebende Einheit (10301) werden mehrere Pflanzen (10101) gleichzeitig erfasst, wobei die Auswertung vorzugsweise mittels Image Recognition durch künstliche Intelligenz stattfindet. Dadurch ist zunächst die automatische Erfassung der eingesetzten Pflanze (10101) möglich und es kann eine Erkennung der Wachstumsphase und entsprechende gezielte Steuerung des Lichts für optimales Wachstum erfolgen. Ferner wird eine (Früh-)Erkennung von Schädlingen, Krankheiten, Nährstoffmängeln und Nährstoffüberschüssen gegeben. Darüber hinaus kann fallgebunden bei Nutzpflanzen eine viel genauere Vorhersage des Erntezeitpunkts und der Erntemenge getroffen werden, als das bisher ohne Berücksichtigung der tatsächlichen Umgebungsparameter und ohne kontinuierliche Überwachung des Wachstumsentwicklung der Fall ist. Mit dem erfindungsgemäßen System (1) werden für jede einzelne Pflanze (10101) die realen Umgebungsparameter als Grundlage für die Vorhersage herangezogen.

Das erfindungsgemäße System (1) bietet durch das zusätzliche Vorsehen von Lichtintensitätssensoren (511) die Möglichkeit der flächendeckenden Erfassung des einstrahlenden natürlichen Lichts und damit die automatische Anpassung der Beleuchtung durch die erfindungsgemäße Beleuchtungsmatrix (10501). Hiermit wird zunächst eine Reduktion der Betriebskosten des erfindungsgemäßen Systems (1) erreicht, da die Beleuchtung ca. 95 % des gesamten Energieverbrauchs ausmacht. Interessant für Zierpflanzen ist das Erzielen einer einheitlichen Ästhetik dieser Pflanzen und ein Entgegenwirken von "schiefem" Wachstum (Phototropismus), da die erfindungsgemäße Beleuchtungsmatrix (10501) eine gezielte pflanzenspezifische Beleuchtung erlaubt, das heißt unterschiedliche Lichtwellen (qualitativ) und Intensität (quantitativ) je Pflanze. Bei Nutzpflanzen wird eine Steuerung der Gestalt und Reifezeit (Blattgröße, Anzahl Blätter, (geringere) Pflanzenhöhe, (geringere) Pflanzenbreite, (verkürzte) Zeit zur Blüte, (verkürzte) Zeit zur Fruchtreife) erreicht. Dadurch wird der Anbau von Nutzpflanzen ermöglicht, welche ursprünglich für ein solches System (1) zu expansiv wären. Im Gegensatz dazu kann man auch entsprechend größere Blätter bei vegetativen Pflanzen wie Salaten und Kräutern, und dadurch eine größere Erntemenge, erreichen.

Das erfindungsgemäße System (1) verfügt über ein für das menschliche Auge vorwiegend als "weiß" erscheinendes Spektrum, was es erleichtert, bzw. ermöglicht, eine frühe Diagnose von Krankheiten und dergleichen ohne die Notwendigkeit eines erfahrenen Benutzers zu stellen. Generell wird ein angenehmes "schöneres" Erscheinungsbild, im Gegensatz zu dem weit verbreiteten lila, erzeugt, in dem Menschen ohne zusätzliche Schutzausrüstung nur wenig sehen können. Dadurch müssen außerdem keine speziellen Kameras oder Filter in der bildgebenden Ebene (103) benutzt werden, man kann auf kostengünstige, alltägliche Kameras zurückgreifen.

Das erfindungsgemäße System (1) bietet einen "Urlaubs-Modus", bei welchem die Ausstrahlung eines speziellen Farbspektrums in spezieller Intensität vorgenommen wird. Hierdurch kann das Wachstum der Pflanzen (10101) gebremst werden, ein verringerter Wasser- und Nährstoffverbrauch führt dazu, dass ein volles Reservoir (10901) länger vorhält. Außerdem kann die Blüte von früchtetragenden Pflanzen (10101) bis nach dem Urlaub hinausgezögert werden, damit es z.B. bei solchen Pflanzen (10101), bei denen eine manuelle Bestäubung durch den Benutzer nötig ist, nicht zu einem Totalausfall der Ernte kommt.

Eine andere Weiterbildung des erfindungsgemäßen Systems (1) sieht einen passiven oder aktiven Kühlkörper, bzw. eine passive oder aktive Wärmesenke vor, welcher/welche entlang der Beleuchtungsmatrix (10501) verläuft und sich auf der den LEDs abgewandten Seite befindet. Dank einer solchen Kühlung können potentiell leistungsstärkere LEDs verwendet bzw. die LEDs stärker betrieben werden, ohne dass es zu Einbußen bzgl. deren Lebensdauer kommt.

Eine weitere spezielle Ausführungsform sieht vor, dass zusätzlich zumindest eine grüne LED (Wellenlängenspektrum von 500 nm - 600 nm) vorgesehen ist, um Krankheitsbilder für das menschliche Auge besser sichtbar zu machen (falls die zumindest eine weiße LED nicht ausreicht). Ferner kann zumindest eine zusätzliche UV-LED (Wellenlängenspektrum von 280 nm - 400 nm) vorgesehen sein, um Keime abzutöten und die Gesundheit der Pflanzen (10101) langfristig zu verbessern.

Eine spezielle Ausführungsform sieht vor, dass das erfindungsgemäße System (1) ferner über mindestens eine Einrichtung zur Anzeige von Analyseergebnissen oder Nährstoffdefiziten verfügt.

In einer erfindungsgemäßen Ausführungsform bilden die bildgebende Ebene (103) und die lichtgebende Ebene (105) eine gemeinsame Ebene. Diese Ausführung ist platzsparend und vermeidet ansonsten, dass Teile der Beleuchtungsmatrix (10501) (z.B. LEDs mit Aufhängung) den Aufnahmebereich der bildgebenden Einheit (10301) zumindest teilweise verdecken (d.h. lichtgebende Ebene (105) vor bildgebender Ebene (103)) oder aber die bildgebende Einheit (10301) einen Schatten auf die Pflanzen (10101) werfen (bildgebende Ebene (103) vor lichtgebender Ebene (105)).

Es hat sich für die korrekte Erfassung der einzelnen Pflanzen (10101) als vorteilhaft herausgestellt, wenn die zumindest eine bildgebende Einheit (10301) auf zumindest eine Pflanze (10101) ausgerichtet ist. Wird eine bildgebende Einheit (10301) auf mehrere Pflanzen (10101) gleichzeitig gerichtet, wird das erfindungsgemäße System (1) umso kostengünstiger, je mehr Pflanzen (10101) pro bildgebender Einheit (10301) erfasst werden können. Allerdings kann es je nach Art der Pflanze (10101) sinnvoll sein, mehr als eine bildgebende Einheit (10301) pro Pflanze (10101) anzuordnen, um mehr Daten zu erhalten.

Bei dem erfindungsgemäßen System (1) kann die zumindest eine bildgebende Einheit (10301) in der bildgebenden Ebene (103) verfahrbar ausgestaltet sein. Hiermit wird gerade bei kleinerer Systemauslegung eine Kosteneinsparung erreicht. Zudem können in diesem Fall mit nur einer bildgebenden Einheit (10301) mehrere Bilder aus verschiedenen Winkeln unterschiedlicher (oder nur einer) Pflanze (10101) aufgenommen und ausgewertet werden, d.h. je mehr Bilder, umso mehr Daten umso höhere Genauigkeiten bei den Messparametern.

In einer speziellen Ausführungsform umfasst die Versorgungseinheit (109) ferner
- zumindest eine Mischeinheit (10907), die über einen eigenen Flüssigkeitsspeicher (1090701) verfügt und mit einer Fluidleitung mit dem zentralen Reservoir (10901) verbunden ist, und
- eine Pumpeneinheit (10903) zur Förderung der Flüssigkeit in das zentrale Reservoir (10901).

Mit dieser speziellen Ausführungsform wird die gezielte Versorgung der Pflanzen (10101) sichergestellt. Der Versorgungseinheit (109) werden eine oder mehrere Mischeinheiten (10907) mit eigenem Flüssigkeitsspeicher (1090701) zugefügt, in welchen unterschiedliche Flüssigkeiten gegeben werden können, beispielsweise Lösungen zur Einstellung des pH-Werts des Wassers oder unterschiedliche Nährstoffkonzentrate. Wasserstandsensoren messen den Füllstand des Flüssigkeitsspeichers (1090701) und können bei niedrigem Stand ein Signal geben. Mit dieser Ausführungsform muss ein Benutzer selbst keine Nährstoffe zugeben, was einen höheren Grad der Automatisierung bedeutet und die Gefahr für eine Überdosierung oder Unterdosierung deutlich verringert.

Die erfindungsgemäße Pumpeneinheit (10903) ist insbesondere als eine peristaltische Pumpe ausgebildet, welche insbesondere eine tröpfchengenaue Dosierung der Nährstoffkonzentrate ermöglicht.

Die vorstehend genannte Aufgabe wird in einem zweiten Aspekt der vorliegenden Erfindung durch ein Modul (3) zur passiven aeroponischen Bewässerung von Pflanzen in vertikaler Richtung gelöst, umfassend
- zumindest einen rohrartigen Hohlraum (301), der von einer Außenwand (303) umgeben ist,
- zumindest einen passiven Zerstäuber (305), welche den rohrartigen Hohlraum (301) in horizontaler Richtung durchtrennt, wobei der passive Zerstäuber (305) mindestens eine radial in der Ebene des passiven Zerstäubers (305) angeordnete Umgehungsleitung (30501) zur Umleitung des Fluidflusses durch den passiven Zerstäuber (305) hindurch auf die darunter liegende Innenwand des rohrartigen Hohlraums (301) aufweist, und
- zumindest einen Pflanzenhalter (309), der in zumindest einer Öffnung (307) des rohrartigen Hohlraums (301) anordenbar ist,
   wobei der zumindest eine Pflanzenhalter (309) eine Aufnahmeöffnung (30901) für eine Pflanze (10101) und gegenüberliegend der Aufnahmeöffnung (30901) eine Bodenöffnung (30903) aufweist, welche in den rohrartigen Hohlraum (301) hinein gerichtet ist.

Unter "aeroponischer Bewässerung" wird in der vorliegenden Erfindung ein Spezialfall der Hydroponik, also dem erdlosen Anbau von Pflanzen (10101), verstanden. Die Aeroponik ermöglicht durch die Zerstäubung des Wassers eine verbesserte Aufnahme der Nährstoffe durch die Pflanzenwurzeln und damit eine Wasserersparnis und Beschleunigung des Wachstums. Das ist ressourcensparender und sorgt für gesündere Pflanzen (10101).

Die Angabe "vertikale Richtung" ist erfindungsgemäß so zu verstehen, dass das erfindungsgemäße Modul (3) grundsätzlich aufrecht steht, es jedoch aus der Vertikalen um bis zu 45 Grad geneigt sein kann, ohne von der vorliegenden Erfindung abzuweichen und die beschriebenen Vorteile und Wirkungen zu verlieren.

Ferner können in einer anderen erfindungsgemäßen Ausführungsform die einzelnen Module (3) versetzt zueinander angeordnet sein, so dass eine treppenstufige Anordnung entsteht. Die einzelnen Module (3) selbst sind genau vertikal aufgestellt und werden zusätzlich schräg/fast horizontal durch Schläuche verbunden. Das verbindende Element kann jeden Winkel zwischen 3 Grad und 90 Grad annehmen. Die Pflanzenebene (101) wird in jedem Fall der Anordnung (vertikal, schräg, treppenförmig) durch die Mittelpunkte der Öffnung (307) der Pflanzentöpfe, wo die Pflanze (10101) im Medium (315) verschwindet, aufgestellt.

Der erfindungsgemäße "rohrartige Hohlraum" (301) ist das zentrale Bauteil des erfindungsgemäßen Moduls (3). Dieser kann eine runde oder rechteckige Grundfläche aufweisen, auch mehreckige Formen sind grundsätzlich möglich.

Unter dem "passiven Zerstäuber" (305) wird erfindungsgemäß eine den rohrartigen Hohlraum (301) ganzheitlich horizontal durchtrennende Ebene verstanden. Die dadurch entstehende Stauzone bezeichnet den Raum oberhalb des passive Zerstäubers (305)

(innerhalb des Hohlraums (301)), in dem sich das Wasser aufstaut, während die darunterliegende Zone die Sprühzone ist, in welcher der Sprühnebel auftritt. Der passive Zerstäuber (305) besitzt in grob vertikaler Richtung verschiedene Öffnungen für die Umgehungsleitung (30501), einen Mediumspeiser (30503) sowie Überläufe (30505).

Der "Pflanzenhalter" (309) bezeichnet erfindungsgemäß ein Element, das um 135 Grad zum unteren Teil des rohrartigen Hohlraums (301) angewinkelt ist und eine rohrartige Abzweigung mit Aufnahmeöffnung (30901) aufweist. Die Aufnahmeöffnung (30901) ist am abstehenden/vom Hohlraum (301) weiter entfernten Ende und eine Bodenöffnung (30903) am anderen Ende angeordnet, welche eine von außen geschlossene Verbindung in den rohrartigen Hohlraum (301) bildet. In die Aufnahmeöffnung (30901) werden entweder direkt oder mittels eines Pflanzentopfs (313) Pflanzen (10101) eingebracht.

Die Pflanze (10101) wird vorzugsweise nicht direkt in den Pflanzenhalter (309) gesteckt, sondern befindet sich vorzugsweise selbst in einem hydroponischen Medium (315), das selbst in einem Pflanzentopf (313) steckt. Der Pflanzentopf (313) wird dann in den Pflanzenhalter (309) gesteckt.

Durch die Bodenöffnung (30903) in dem erfindungsgemäßen Pflanzenhalter (309), welche in den rohrartigen Hohlraum (301) hinein gerichtet ist, wird die Möglichkeit zur Befestigung einer Pflanze (10101) so gegeben, dass mindestens das Wurzelgeflecht ins Innere des rohrartigen Hohlraums (301) ragt.

Das erfindungsgemäße Modul (3) zeichnet sich gegenüber dem Stand der Technik dadurch aus, dass eine aeroponische Zerstäubung der Nährstoffflüssigkeit durch Gravitation und eine spezielle Form erzeugt wird, statt durch aktiv betriebene, störanfällige Elektronik.

Die erfindungsgemäß ermöglichte passive Zerstäubung des Wassers bzw. der Nährlösung durch spezielle erfindungsgemäße Form des passiven Zerstäubers (305) oberhalb jedes Pflanzenhalter (309) in dem rohrartigen Hohlraum (301) führt zu einer verbesserten Aufnahme der Nährstoffe durch die Pflanzen (10101) und erhöht deren Fähigkeit zur Sauerstoffaufnahme. Dadurch wird das Wurzelwachstum angeregt, was wiederum den Ertrag erhöht und Zeit bis zur Ernte verringert. Darüber hinaus wird eine Reduktion des Wasserverbrauchs der Pflanzen (10101) erreicht. Es muss daher seltener Wasser bzw. Nährlösung nachgefüllt werden als bei Produkten aus dem Stand der Technik. Im Gegensatz zum Stand der Technik, bei dem Aeroponik durch anfällige, aktive Elemente wie Sprinkler oder Ultraschallmembranen erzeugt wird, wird hier keine Wartung benötigt, es kommt zu keinen Ausfällen und es werden keine weiteren laufenden Kosten erzeugt.

Die passive Umleitung des Wasserflusses mit einem kleinen Strom auf das darunter liegende Medium (315) (bei eingesteckter Pflanze (10101)) führt ebenfalls zu einer optimalen Bewässerung des Anzuchtmediums und verhindert eine mechanische "Stutzung" (ein Abschneiden) der jungen Wurzeln.

Durch die vertikale Orientierung des erfindungsgemäßen Systems (1) und das separate zentrale Reservoir (10901) ist es möglich, "Dürrephasen" in der Bewässerung zu erzeugen, was das vegetative Wachstum fördert und den Ertrag erhöht. Ebenso wird die Zeit zur Blüte verkürzt und die Ernte von Früchten beschleunigt. Das ist bei Systemen aus dem Stand der Technik, wo eine dauerhafte Bewässerung über Dochte oder dochtartige Hydroponik verwendet wird, nicht möglich.

Die Anbringung der Pflanzen (10101) im Inneren des erfindungsgemäßen Systems (1) und die mögliche Verschattung mit lichtundurchlässigen Materialien führt zu einer Vorbeugung der Bildung von Algen, welche den Nährstoffgehalt des Wassers für die Nutzpflanzen nachteilig verändern würden und einen für Endverbraucher unzumutbaren üblen Geruch entfalten würden.

Es ist in einer Weiterbildung der Erfindung vorgesehen, dass die Umgehungsleitung (30501) grundsätzlich einen runden Querschnitt aufweist. Diese kann vorteilhafterweise sowohl seitlich als auch im hinteren Bereich des rohrartigen Hohlraums (301) angeordnet sein. Für den Fall, dass es mehr als eine Umgehungsleitung (30501) gibt, sollten diese zueinander radial um eine Achse durch den passiven Zerstäuber (305) angeordnet sein um eine gleichmäßige Zerstäubung im unteren Bereich, d.h. in der Sprühzone, zu erzielen.

In einer anderen Weiterbildung besitzt der passive Zerstäuber (305) ein Loch direkt an der inneren Seite der Außenwand (303) im Bereich des rohrartigen Hohlraums (301), das erfindungsgemäß als "Mediumspeiser" (30503) bezeichnet wird. Der Mediumspeiser (30503) ist eine Öffnung mit einem Durchmesser von 3 mm bis 390 mm (bevorzugt 5 mm - 8 mm), deren Ausgang so über der Bodenöffnung (30903) des Pflanzenhalters (309) angeordnet ist, dass diese einen Teil der Flüssigkeit auf das darunterliegende Medium (315) eines eingesteckten Pflanzentopfs (313) umlenkt. Das Profil des Mediumspeisers (30503) kann sich dabei entweder in Richtung des Mediums (315) hin verkürzen oder schräg angeordnet sein, um eine Ausrichtung des Wasserflusses auf das Medium (315) zu erreichen.

Ferner ist es erfindungsgemäß vorgesehen, dass in einer Weiterbildung der passive Zerstäuber (305) zusätzlich mindestens eine in die Höhe ragende schlitzartige Öffnungen besitzt, sog. "Überlauf" (30505), der jeweils umgeben ist von Wänden in vertikaler Richtung nach oben, um einen Durchfluss erst bei einem Wasserrückstau in der Höhe dieser Wände zu ermöglichen (Höhe bevorzugt ca. 3 cm). Dieser Überlauf (30505) befindet sich direkt an der inneren Seite der Außenwand (303) des rohrartigen Hohlraums (301). Es kann theoretisch vorkommen, dass die Löcher des passiven Zerstäubers (305) verstopft werden. In dem Fall garantiert der Überlauf (30505) entsprechend die Funktionsweise der darunter liegenden Module (3).

Besonders bevorzugt ist der erfindungsgemäße Pflanzenhalter (309) in einem Winkel von mindestens 135 Grad Winkel zum unteren Teil des rohrartigen Hohlraums (301) angeordnet und weist eine Öffnung/Verbindung zum Inneren des rohrartigen Hohlraums (301) auf.

Eine andere Ausführungsform sieht vor, dass am oberen und unteren Ende des rohrartigen Hohlraums (301) ein Mechanismus (311) zur wasserdichten Reihenschaltung von mehreren erfindungsgemäßen Modulen (3) in vertikaler Richtung vorgesehen ist.

Zudem kann an der äußeren Rückwand (des Moduls (3)) ein Mechanismus zur Befestigung (517) des erfindungsgemäßen Moduls (3) an einer Rückwand vorgesehen sein, beispielsweise als Befestigung (517) entweder über Schraub-, Steck- oder Schienenverbindungen.

Es hat sich als vorteilhaft herausgestellt, wenn für das erfindungsgemäße Modul (3) alle Kanten im Inneren abgerundet sind, damit diese keinen Wasserrückstau und Salzablagerungen zulassen.

Als Material für das erfindungsgemäße Modul (3) hat sich ein lebensmittelechter Kunststoff mit glatter Oberfläche als sinnvoll herausgestellt, beispielsweise ein Polyethylen in hoher Dichte (PE-HD). Dieser Kunststoff kann darüber hinaus eine lichtundurchlässige Pigmentierung enthalten.

Das erfindungsgemäße Modul (3) ist insbesondere als Einheit gefertigt, wobei der passive Zerstäuber (305) herausnehmbar ausgestaltet ist.

In einer Weiterbildung des erfindungsgemäßen Moduls (3) verläuft die zumindest eine Umgehungsleitung (30501) oberhalb des passiven Zerstäubers (305) und weist innerhalb des passiven Zerstäubers (305) eine Biegung in Richtung der Horizontalen auf, wobei das Ende der Umgehungsleitung (30501) auf die Innenwand des rohrartigen Hohlraums (301) gerichtet ist. Die Formulierung "in Richtung der Horizontalen" bedeutet, dass die Umgehungsleitung (30501) in einem Winkel von der Horizontalen (d.h. 90 Grad zur Achse des erfindungsgemäßen Moduls (3)) bis zu 70 Grad, bevorzugt bis zu 80 Grad (zur Achse des erfindungsgemäßen Moduls (3)) ausgerichtet ist.

Dadurch kommt es durch Gravitationskraft getrieben zur teilweisen Zerstäubung des Wasserflusses, was eine passive Aeroponik bedingt. Ferner werden erreicht eine verbesserte Aufnahme der Nährstoffe durch die Pflanzen (10101), ein besseres Wurzelwachstum, eine Ertragssteigerung, eine Verringerung Zeit bis zur Ernte, eine Reduktion des Wasserverbrauchs. Außerdem werden die Wände bewässert, d.h. ein gebremster Wasserstrom läuft an den Wänden entlang und nicht im Inneren des Hohlraums (301), dadurch kommt es zu keiner Stutzung der Wurzeln.

Es ist erfindungsgemäß bevorzugt, wenn die Umgehungsleitung (30501) einen Durchmesser von 2 mm bis 50 mm, bevorzugt 2 mm bis 4 mm, hat, und wenn die zumindest eine Umgehungsleitung (30501) an ihrem Ende einen Abstand zur Innenwand des rohrartigen Hohlraums (301) von 1,5 mm bis 160 mm hat.

Ein geringerer Durchmesser der Umgehungsleitung (30501) führt ohne durch Druck / Gravitation getrieben zu sein zu einer Tröpfchenbildung, nicht zu einem stetigen Fluss.

Mit dem Durchmesser von 2 mm bis 50 mm wird ein stetiger Fluss sichergestellt, während der Abstand zur Innenwand des rohrartigen Hohlraums (301) von 1,5 mm bis 160 mm dazu führt, dass die Vernebelungswirkung für die Flüssigkeit gesteigert, und sichergestellt wird, dass der Sprühnebel die darunterliegenden Wurzeln erreicht.

Es hat sich als vorteilhaft herausgestellt, wenn der zumindest eine passive Zerstäuber (305) zwischen 0,5 cm und 20 cm über der Bodenöffnung (30903) des Pflanzenhalters (309) beabstandet ist, damit der Sprühnebel den Großteil der hereinragenden Wurzeln erreicht. Erfindungsgemäß besonders bevorzugt ist ein Bereich von 0,5 cm bis 1 cm.

Die vorstehend genannte Aufgabe wird in einem dritten Aspekt der vorliegenden Erfindung durch eine vertikale Pflanzenanlage (5) gelöst, welche zumindest ein erfindungsgemäßes System (1), wie es vorstehend beschrieben wurde, und zumindest ein erfindungsgemäßes Modul (3), wie es vorstehend beschrieben wurde, umfasst. Dabei ist das erfindungsgemäße Modul (3) in der Pflanzenebene (101) des erfindungsgemäßen Systems (1) angeordnet.

Die erfindungsgemäße vertikale Pflanzenanlage (5) kombiniert das erfindungsgemäße System (1) und eine Anordnung einer Vielzahl aus Modulen (3), welche in dieser Konstruktion die Pflanzenebene (101) ausmacht. Dadurch wird ein Produkt geschaffen, welches alle zuvor genannten Aufgaben gleichzeitig löst und dem Benutzer eine "out of the box" Lösung gibt, optimal beschleunigt und ertragsmaximierend, ohne benötigtes Vorwissen, zuverlässig und platzsparend jede beliebige Pflanze (10101) im Innenraum automatisiert anzubauen.

Diese vertikale Pflanzenanlage (5) weist einige Vorteile auf. Durch die platzsparende Anordnung kann sichergestellt werden, dass die Anlage in jedem Haushalt verwendet werden kann (auch ohne Platz auf Fensterbänken, Küchenablagen o.Ä.). Die bildliche Erfassung der Pflanzen (10101) und die Analyse mittels Künstlicher Intelligenz ermöglicht die automatische Erkennung von Krankheiten und dergleichen ohne die Notwendigkeit eines erfahrenen Benutzers. Es wird eine genauere Vorhersage der Erntezeitpunkte sowie die Anpassung der Nährstoffe anhand der gepflanzten Sorten möglich. Es besteht zudem die Möglichkeit der Benachrichtigung des Benutzers zur Anpassung des Klimas im Innenraum.

Pflanzen haben in unterschiedlichen Phasen ihres Wachstums extrem unterschiedlichen Bedarf an spezifischen Nährstoffen. In der Hydroponik verfärben sich die Blätter einer Pflanze je nach spezifischem Nährstoffmangel / Nährstoffüberschuss in einer bestimmten Farbe und einem bestimmten Muster. Dabei benutzen die Pflanzen die Anzahl bestimmter Lichtwellen als Signale der Umgebung und verändern entsprechend ihre Morphologie bzw. ihr Stadium. Als vereinfachte Beispiele können angeführt werden:
- mehr blaues Licht signalisiert Winter/Kälte, Blätter wachsen dicht und dick aneinander um Austrocknung zu verhindern,
- mehr rotes Licht signalisiert Sommer und führt zu schnellerer Blüte, um vor Kälteeinbruch Früchte zu tragen.

Mit der Vorrichtung zur automatischen Anpassung der Nährstoffe und des pH-Werts der Nährlösung kann die Nutzung von Leitungswasser zum Nachfüllen des zentralen Reservoirs (10901) erfolgen.

Die verwendeten Sensoren für Umgebungstemperatur und Luftfeuchtigkeit bewirken eine Adaption des Bewässerungszyklus an die Umgebungsvariablen. Schließlich ist ein Wasserstandsensor vorgesehen, der eine ständige Überwachung des Wasserstands im zentralen Reservoir (10901) und damit die Benachrichtigung bei Nachfüllbedarf ermöglicht.

Die erfindungsgemäße vertikale Pflanzenanlage (5) kann aus einer Anzahl an erfindungsgemäßen Modulen (3) bestehen, die zu vertikalen Säulen (501) zusammengefasst sind. Mehrere dieser vertikalen Säulen (501) können dann nebeneinander angeordnet sein. Ihnen gegenüber ist dann ein oder mehrere erfindungsgemäße Systeme (1) angeordnet.

Die erfindungsgemäße vertikale Pflanzenanlage (5) kann ein peripheres Bewässerungssystem (503) aufweisen.

Das periphere Bewässerungssystem (503) besteht aus Versorgungseinheit (109), (zentrale(s) Reservoir(e) (10901), Zugabeeinrichtungen (10905), Pumpeneinheiten (10903)), einer oder mehreren vertikalen Säulen (501) nebeneinander, den Zugabeeinrichtungen (10905) und entsprechend die Elemente verbindende Schlauch- oder Rohrsysteme. Ein Rahmen (505) macht aus den einzelnen Teilen des Systems (1) sowie der Anordnung einzelner Module (3) eine starre Einheit und fixiert die Pflanzenebene (101), die lichtgebende Ebene (105) und die bildgebende Ebenen (103) in jeweils fester Beziehung zueinander. Am Rahmen (505) befindet sich von der Pflanzenebene (101) abgewandt entweder eine Aufhängungsmöglichkeit zur Befestigung (517) des Produkts an Wänden oder eine Aufstellmöglichkeit im Raum. Es ist eine Frontblende (507) am Rahmen (505) angebracht, welche das Bewässerungssystem (503) vor Augen des Betrachters versteckt und das Bewässerungssystem (503) zusätzlich von einstrahlendem Licht abschirmt. Durch Aussparungen in der Frontblende (507) können die Aufnahmeöffnungen (30901) der Module (3) durch die Frontblende (507) hindurch nach außen ragen und ermöglichen ein Einsetzen der Pflanzen (10101) durch den Benutzer von außen. Eine mit dem Rahmen (505) verbundene Halterung (509) befestigt bildgebende Ebene (103) und lichtgebende Ebene (105) in derselben Ebene und entweder in festem Abstand (z.B. 30 cm) zur Pflanzenebene (101) oder verstellbar innerhalb bestimmter Abstände, welche durch die Konstruktionsweise festgelegt werden (z.B. 10 cm - 50 cm). An/In der Halterung (509) ist außerdem die Kabelführung von den lichtgebende Einheiten und bildgebenden Einheiten (10301) hin zur Steckverbindung angebracht. Das mindestens eine zentrale Reservoir (10901) wird z.B. über Steckverbindungen entnehmbar gestaltet um eine einfache Säuberung zu ermöglichen. Die Steuerungseinheit (107) wird im Inneren des Rahmens (505) angebracht. Zusätzliche Elektronik wie Temperatur- und Luftfeuchtigkeitssensoren (513), Lichtintensitätssensoren (511) und Display (515) sind mit Steuerungseinheit (107) verbunden und werden im Material des Rahmens (505) oder an der Außenseite des Rahmens (505) angebracht.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigt:
- Fig. 1:: eine schematische Ansicht der Vorderseite des erfindungsgemäßen Systems 1,
- Fig. 2:: eine schematische Ansicht der Rückseite des erfindungsgemäßen Systems 1,
- Fig. 3:: eine schematische Ansicht des zentralen Reservoirs 10901 mit Mischeinheiten 10907,
- Fig. 4:: eine schematische Ansicht des erfindungsgemäßen Moduls 3 von außen, inkl. einzusteckendem Pflanzentopf 313 und Medium 315,
- Fig. 5:: eine schematische Schnittansicht des erfindungsgemäßen Moduls 3,
- Fig. 6:: eine schematische Schnittansicht des erfindungsgemäßen Moduls 3 mit Pflanzentopf 313 und Medium 315 im eingesteckten Zustand,
- Fig. 7:: eine schematische Draufsicht des erfindungsgemäßen Moduls 3 und
- Fig. 8:: eine schematische Ansicht der erfindungsgemäßen vertikalen Pflanzenanlage 5.

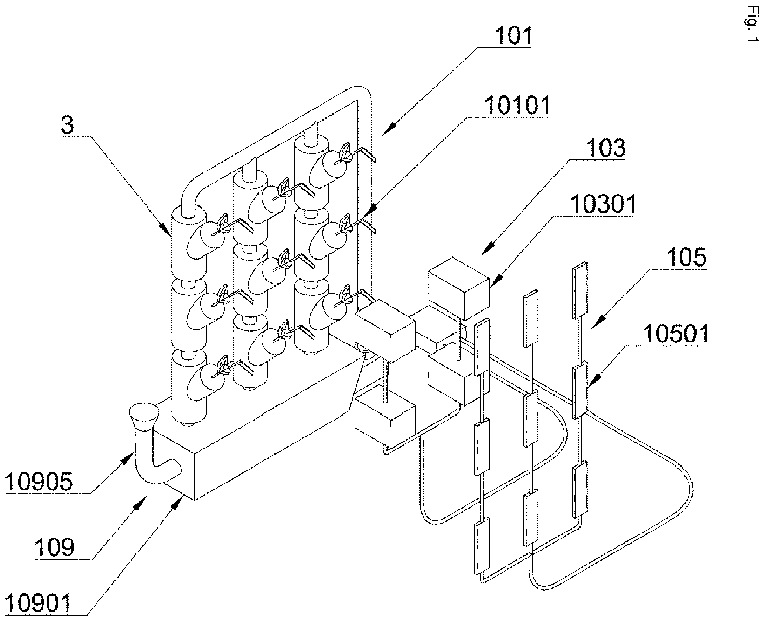

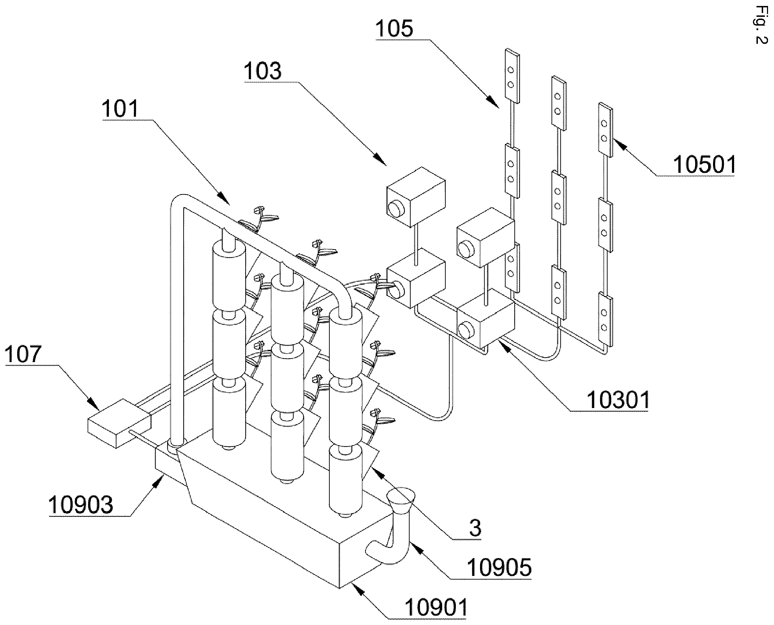

In den Figuren 1 und 2 wird das erfindungsgemäße System 1 aus zwei Blickwinkeln gezeigt. Die Pflanzenebene 101 ist symbolisch (und die Erfindung nicht einschränkend) durch neun Pflanzen 10101 dargestellt die in drei Säulen 501 zu je drei Pflanzen 10101 beispielshaft angeordnet sind. Vier Kameras sind auf die Pflanzen 10101 ausgerichtet und der lichtgebenden Ebene 105 weiter vorgelagert. Figur 2 zeigt deutlich die zentrale Pumpe 10903, von der Steuerungseinheit 107 gesteuert, die das mit Nährstoffen angereicherte Wasser über ein Verteilersystem an die Pflanzen 10101 bringt. Das Wachstum der Pflanzen 10101 wird durch die Kameras und die Auswertung der Bilder mittels der Steuerungseinheit 107 überwacht. Die Anreicherung des Wassers mit Nährstoffen und die gezielte pflanzenspezifische Abgabe des vorteilhaftesten Lichtspektrums geschieht anhand der Ergebnisse der Bildauswertung jeder Pflanze 10101.

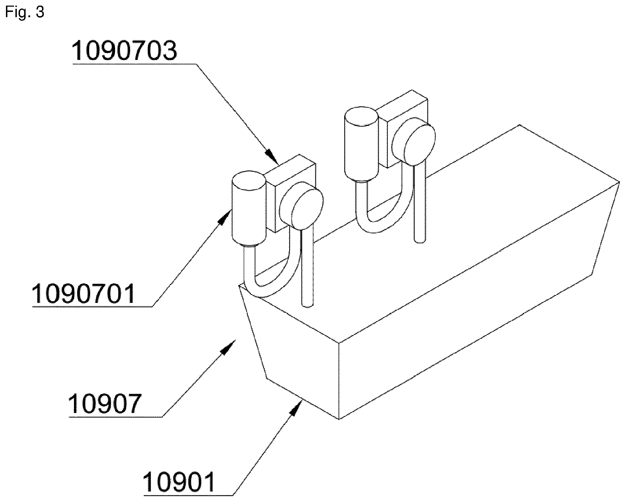

Figur 3 stellt schematisch zwei Mischeinheiten 10907 dar, die auf Anweisung der Steuerungseinheit 107 hin das Wasser im zentralen Reservoir 10901 gezielt mit den benötigten Nährstoffen anreichern, womit dann die Pflanzen 10101 bewässert werden. Dem Flüssigkeitsspeicher 1090701 ist eine Pumpe 1090703 nachgeschaltet.

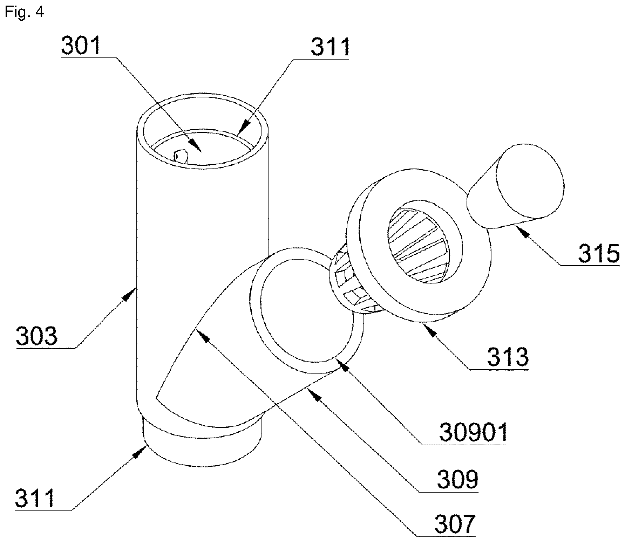

In Figur 4 wird eine Explosionsdarstellung des erfindungsgemäßen Moduls 3 und des einsteckbaren Pflanzentopfs 313 mit Medium 315 gezeigt. In den Pflanzentopf 313 wird später die Pflanze 10101 bzw. der Samen eingepflanzt. Im eingesteckten Zustand werden das Medium 315 und die durch die Öffnungen 307 im Pflanzentopf 313 wachsenden Wurzeln passiv optimal aeroponisch bewässert.

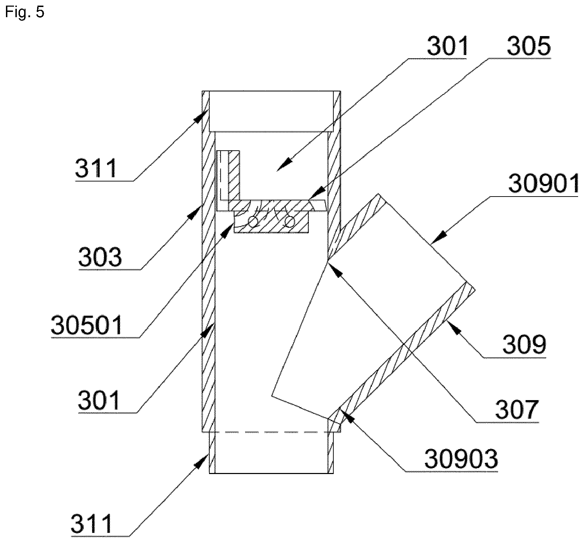

Figur 5 verdeutlicht schematisch die Funktionsweise des erfindungsgemäßen Moduls 3 in der Schnittansicht. Mit den angedeuteten versteckten Kanten wird die radiale Anordnung der Umgehungsleitungen 30501 innerhalb des passiven Zerstäubers 305 ersichtlich.

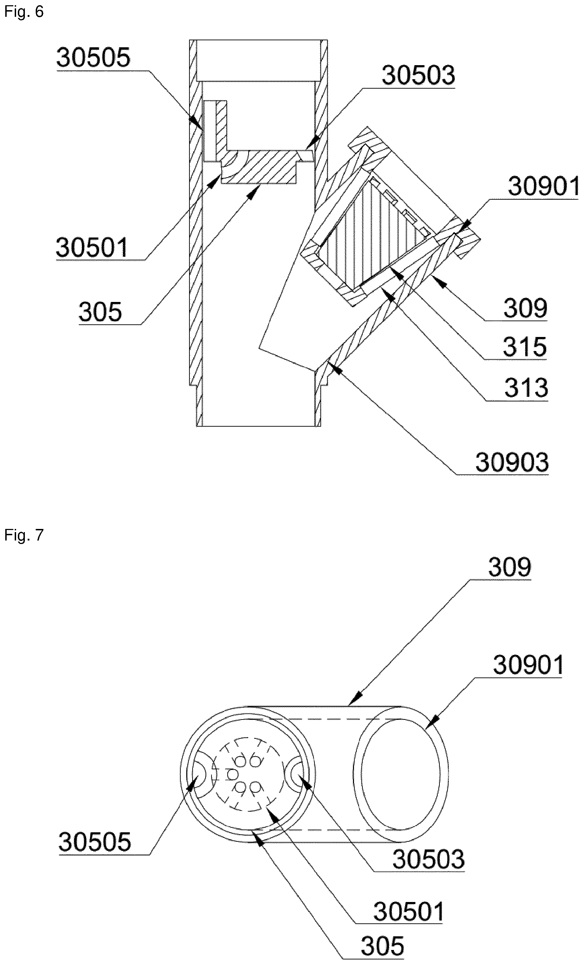

Figur 6 zeigt das erfindungsgemäßen Modul 3 in einer weiteren Schnittansicht, allerdings mit Pflanzentopf 313 und Medium 315 im eingesteckten Zustand. Hier wird deutlich, wie der Mediumspeiser 30503 einen Teil des Wassers direkt auf das schwammartige Medium 315 umlenkt, was Pflanzen 10101 auch in frühen Wachstumsphasen ohne ausgebildete Wurzeln im rohrartigen Hohlraum 301 versorgt. Sollten Mediumspeiser 30503 und alle Umgehungsleitungen 30501 des passiven Zerstäubers 305 verstopft sein, staut sich das Wasser bis zum oberen Eingang des Überlaufs 30505 an und fließt dann ungehindert hindurch.

Figur 7 verdeutlicht in einer schematischen Draufsicht die radiale Anordnung der Umgehungsleitungen 30501 inklusive Mediumspeiser 30503 und Überlauf 30505 im passiven Zerstäuber 305. In dieser Darstellung sind beispielhaft fünf Umgehungsleitungen 30501 dargestellt, die ausgehend von der Mitte des passiven Zerstäubers 105 in verschiedenen radialen Richtungen die Flüssigkeit durchleiten.

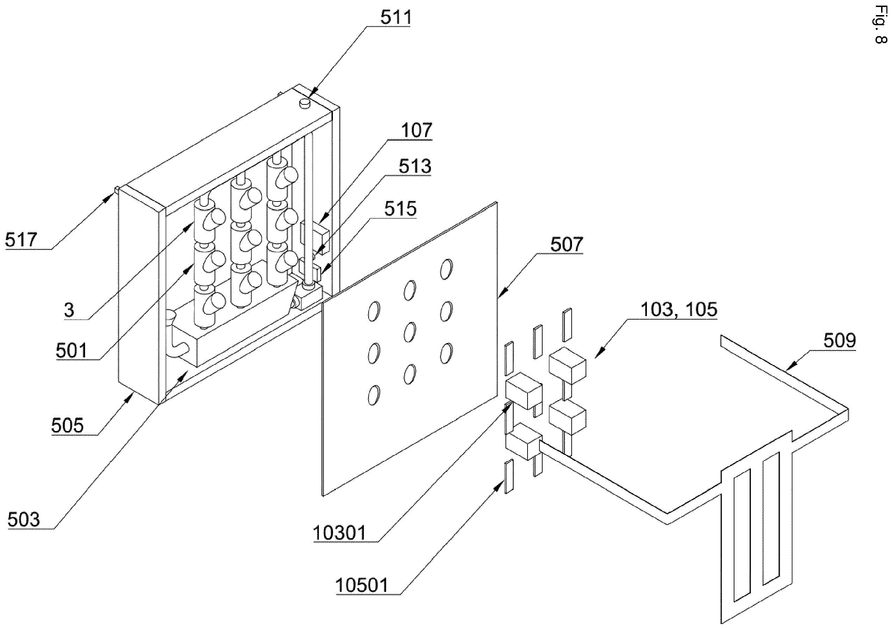

In Figur 8 wird eine Explosionsdarstellung der vertikalen Pflanzenanlage 5 dargestellt. Die Elemente des Systems 1 sind in einem Rahmen 505 mit einer Frontblende 507 fest fixiert. Lichtgebende Ebene 105 und bildgebende Ebene 103 bilden in dieser Darstellung dieselbe Ebene und sind über die Halterung 509 mit dem Rahmen 505, und damit in fixem Abstand zur Pflanzenebene 101, verbunden. Die Pflanzenebene 101 wird durch Pflanzen 10101 gebildet, welche in den Aufnahmeöffnungen 30901 der hier abgebildeten Module 3 gesteckt werden.

Die vorliegende Erfindung stellt ein System 1 und ein Modul 3 zur Verfügung, mit welchen sog. "Vertikale Gärten" hergestellt werden können, die so optimiert sind, dass damit problemlos im Innenraum auch komplett ohne Gärtnererfahrung Pflanzen 10101 angebaut werden können. Dabei werden Hydroponics, also der erdlose Anbau von Pflanzen 10101, genutzt. Speziell wird eine Unterform der Hydroponics, nämlich Aeroponics, angewandt. Durch Zerstäubung des Wassers kommt es zu einer verbesserten Aufnahme der Nährstoffe durch die Pflanzenwurzeln und damit zu einer Wasserersparnis und Beschleunigung des Wachstums. Das ist ressourcensparender und sorgt für gesündere Pflanzen 10101. Dafür wird ein eigens entwickeltes Bewässerungssystem (503) in einem Kasten verwendet, welcher beispielsweise an die Wand gehängt werden kann. In den Kasten können jetzt Pflanzen 10101 eingesteckt werden, die automatisch bewässert und mit Nährstoffen versorgt werden. Vorgelagerte Kameras erkennen die darunterliegenden Pflanzen 10101 und versorgen diese mit der optimalen Beleuchtung und passen je nach Wachstumsstadium die Lichtverhältnisse und Nährstoffe an.

Ein Kern der Erfindung liegt dabei zum einen in der passiven Zerstäubung innerhalb des Bewässerungssystems (503). Normalerweise werden Aeroponics durch elektrische Zerstäubung via Ultraschallmembran (z.B. Vernebler) oder Sprinkleranlagen erzeugt. Beide Komponenten sind anfällig für Störungen. Zum anderen können durch die eingesetzten Kameras und die Auswertung der erzeugten Bilder menschliche Betrachter ersetzt werden. Die künstliche Intelligenz lässt den Benutzer beispielsweise über eine Smartphone-App alles wissen. Dadurch können nicht nur notwendige Vorkenntnisse ersetzt werden, das System 1 kann auch Umgebungsparameter wie die Beleuchtung und den Nährstoffgehalt des Wassers für verbessertes Wachstum anpassen.

Das Beleuchtungssystem mit Steuerung besteht in einer praktischen Ausführungsform aus aneinandergereihten, vertikal verlaufenden Modulen 3 in einem Rahmen 505, einem Wasserreservoir 10901, einer Wasserpumpe 10903 und entsprechendem Verteilerschlauch. Ein zusätzlicher Mikroprozessor verfügt über Sensorik zum Messen von Luftfeuchtigkeit, Umgebungstemperatur, Wasserstand und Licht-Intensität, sowie über einen internen Speicher, Anbindung an das WLAN mit einem WiFi-Modul und ein LCD oder Status-LEDs zur Anzeige. Dem System 1 ist vertikal verlaufend eine Beleuchtung vorgelagert. An der Halterung 509 befinden sich ebenfalls Kameras mit Ausrichtung auf die Pflanzenmodule 3 und Anbindung an den Mikroprozessor. Das System 1 könnte außerdem über eine Vorrichtung für die Montage an einer Wand verfügen.

Das Bewässerungssystem 503 mit Bewässerungsleitung ermöglicht eine nahtlose Reihenschaltung der Pflanzen 10101 in vertikaler Richtung. Dabei handelt es sich quasi um ein Rohr mit Öffnungen oben, unten und entsprechenden Mechanismen zum ineinanderstecken. Eine Abzweigung des Rohres geht schräg nach oben im 45 Grad Winkel und besitzt eine weitere Öffnung 307 des Moduls 3 für einen Pflanzentopf 313. Knapp über der Abzweigung befindet sich ein horizontaler passiver Zerstäuber 305 im Modul 3, welches mit verschiedenen Mustern zur Verteilung des Wassers versehen werden kann.

Der Pflanzenhalter 309 ist der Behälter für Medium 315 und Pflanze 10101. Dieser ist ein weiterer, nicht standardisierter Bestandteil des vertikalen Gartens. Er ist eine Halterung 509 für das Medium 315 und die Pflanze 10101 und kann auch als ein auf der einen Seite verjüngtes Rohr verstanden werden. Auf der Unterseite befindet sich eine runde Öffnung um entsprechendes Wurzelwachstum nicht zu verhindern und um einfaches Herausdrücken des Mediums 315 und der Pflanze 10101 zu ermöglichen. Die Seiten des Topfes sind mit Öffnungen versehen, welche dem Topf zwar genügend Stabilität geben aber auf der anderen Seite den Wurzeln genügend Platz zum herauswachsen geben. Dadurch wird vor Allem im oberen Teil des Topfs eine sog. Luftbeschneidung erreicht, was am Ende das Pflanzenwachstum beschleunigt.

### Bezugszeichenliste

- 1: System zur automatischen Erkennung von Wachstumsparametern bei Pflanzen
- 101: Pflanzenebene
- 10101: Pflanze
- 103: bildgebende Ebene
- 10301: bildgebende Einheit
- 105: lichtgebende Ebene
- 10501: Beleuchtungsmatrix
- 107: Steuerungseinheit
- 109: Versorgungseinheit
- 10901: zentrales Reservoir
- 10903: Pumpeneinheit
- 10905: Zugabeeinrichtung
- 10907: Mischeinheit
- 1090701: Flüssigkeitsspeicher
- 1090703: Pumpe
- 3: Modul
- 301: rohrartiger Hohlraum
- 303: Außenwand
- 305: passiver Zerstäuber
- 30501: Umgehungsleitung
- 30503: Mediumspeiser
- 30505: Überlauf
- 307: Öffnung
- 309: Pflanzenhalter
- 30901: Aufnahmeöffnung
- 30903: Bodenöffnung
- 311: Mechanismus zur Reihenschaltung
- 313: Pflanzentopf
- 315: Medium
- 5: Vertikale Pflanzenanlage
- 501: Säule
- 503: Periphere Bewässerungssystem
- 505: Rahmen
- 507: Frontblende
- 509: Halterung
- 511: Lichtintensitätssensoren
- 513: Temperatur- und Luftfeuchtigkeitssensoren
- 515: Display
- 517: Befestigung

## Patentansprüche

1. System (1) zur automatischen Erkennung von Wachstumsparametern bei Pflanzen und zur spezifischen Steuerung der Pflanzenmorphologie, umfassend
- eine Pflanzenebene (101), welche zumindest eine Pflanze (101) aufweist,
- eine bildgebende Ebene (103), welche zumindest eine bildgebende Einheit (10301) aufweist,
- eine lichtgebende Ebene (105), welche zumindest eine Beleuchtungsmatrix (10501) aufweist,
wobei die bildgebende Ebene (103) und die lichtgebende Ebene (105) parallel zu der Pflanzenebene (101) angeordnet und zu dieser hin ausgerichtet sind,
- eine Versorgungseinheit (109) zur Versorgung der Pflanzenebene (101) mit Flüssigkeit, welche mindestens ein zentrales Reservoir (10901) mit einer Zugabeeinrichtung (10905) aufweist, und
- eine Steuerungseinheit (107) zur Auswertung und Verarbeitung der bildgebenden Ebene (103), zur Steuerung der lichtgebenden Ebene (105) und zur Steuerung der Versorgungseinheit (109),
wobei die Beleuchtungsmatrix (10501) der lichtgebenden Ebene (105)
- zumindest eine weiße LED, zumindest eine blaue LED, zumindest eine rote LED und zumindest eine fern-rote LED
oder
- zumindest eine weiße LED mit einem erhöhten Rotanteil, zumindest eine weiße LED mit einem erhöhten Blauanteil und zumindest eine fern-rote LED aufweist.

2. System (1) nach Anspruch 1, wobei die bildgebende Ebene (103) und die lichtgebende Ebene (105) eine gemeinsame Ebene bilden.

3. System (1) nach Anspruch 1 oder 2, wobei die zumindest eine bildgebende Einheit (10301) auf zumindest eine Pflanze (10101) ausgerichtet ist.

4. System (1) nach einem der Ansprüche 1 bis 3, wobei die zumindest eine bildgebende Einheit (10301) in der bildgebenden Ebene (103) verfahrbar ausgestaltet ist.

5. System (1) nach einem der Ansprüche 1 bis 4, wobei die Versorgungseinheit (109) ferner umfasst
- zumindest eine Mischeinheit (10907), die über einen eigenen Flüssigkeitsspeicher (1090701) verfügt und mit einer Fluidleitung mit dem zentralen Reservoir (10901) verbunden ist, und
- eine Pumpeneinheit (1090703) zur Förderung der Flüssigkeit in das zentrale Reservoir (10901).

6. Modul (3) zur passiven aeroponischen Bewässerung von Pflanzen in vertikaler Richtung, umfassend
- zumindest einen rohrartigen Hohlraum (301), der von einer Außenwand (303) umgeben ist,
- zumindest einen passiven Zerstäuber (305), welcher den rohrartigen Hohlraum (301) in horizontaler Richtung durchtrennt,
wobei der passive Zerstäuber (305) mindestens eine radial in der Ebene des passiven Zerstäubers (305) angeordnete Umgehungsleitung (30501) zur Umleitung eines Fluidflusses durch den passiven Zerstäuber (305) hindurch auf die darunter liegende Innenwand des rohrartigen Hohlraums (301) aufweist, und
- zumindest einen Pflanzenhalter (309), der in zumindest einer Öffnung (307) des rohrartigen Hohlraums (301) anordenbar ist,
wobei der zumindest eine Pflanzenhalter (309) eine Aufnahmeöffnung (30901) für eine Pflanze (10101) und gegenüberliegend der Aufnahmeöffnung (30901) eine Bodenöffnung (30903) aufweist, welche in den rohrartigen Hohlraum (301) hinein gerichtet ist.

7. Modul (3) nach Anspruch 6, wobei die zumindest eine Umgehungsleitung (30501) oberhalb des passiven Zerstäubers (305) verläuft und unterhalb des passiven Zerstäubers (305) eine Biegung in Richtung der Horizontalen aufweist, wobei das Ende der Umgehungsleitung (30501) auf die Innenwand des rohrartigen Hohlraums (301) gerichtet ist.

8. Modul (3) nach Anspruch 6 oder 7, wobei die Umgehungsleitung (30501) einen Durchmesser von 2 mm bis 50 mm hat, und wobei die zumindest eine Umgehungsleitung (30501) an ihrem Ende einen Abstand zur Innenwand des rohrartigen Hohlraums (301) von 1,5 mm bis 160 mm hat.

9. Modul (3) nach einem der Ansprüche 6 bis 8, wobei der zumindest eine passive Zerstäuber (305) zwischen 0,5 cm und 20 cm über der Bodenöffnung (30903) des Pflanzenhalters (309) beabstandet ist.

10. Vertikale Pflanzenanlage (5), umfassend
- zumindest ein System (1) nach einem der Ansprüche 1 bis 5,
- zumindest ein Modul (3) nach einem der Ansprüche 6 bis 9,
wobei das Modul (3) in der Pflanzenebene (101) des Systems (1) angeordnet ist.
